# EUROPEAN PATENT APPLICATION

(11) **EP 1 222 969 A1**
(43) Date of publication of application: **17.07.2002**
(21) Application number: 01100082.5
(22) Date of filing: 10.01.2001
(51) Int. Cl.: B05C 9/02, B05C 11/08, G11B 7/26, B29C 65/52

(54) **Process and device for coating disks**

(71) Applicant: Sawatzki, Bruno, 9492 Eschen (LI); Sawatzki, Harry L., 9494 Schaan (LI)
(72) Inventor: Sawatzki, Bruno, 9492 Eschen (LI); Sawatzki, Harry, 9494 Schaan (LI)
(74) Representative: Rosenich, Paul

(57) **Abstract**

Device for coating disks (3), particularly optically readable data carriers, with a holding device or holding a disk to be coated (3), an annular applicator (8) for the application of coating liquid to the disk (3) and a container (7) for diving of a stamp body (8). The coating liquid is applied either from the nozzle or by said diving.

The advantage is that the quantity of liquid may be distributed easily.

## Description

The invention concerns a device according to the features of the preamble in claim 1 and a process according to the features of the preamble in claim 12.

During one frequently used production (deposition) process of compact disks or optically readable data carriers, for example, CD-R- or CD-RW- disks, digital video disks (DVD), or DVD-RW the disk is placed on a rotating support in a clean-air room and a coating liquid applied to the rotating disk from above by means of a nozzle. The centrifugal force acting upon the rotating disk is supposed to distribute the coating liquid outward and evenly over the surface of disk. The demands imposed relative to maintaining the desired coating depth (height of the coating after the deposition process) are great.

Following the application of those layers acting as information carriers, a protective coating, in particular a lacquer coating, is applied. In the case of DVDs with multiple layers, or coated on both sides, two disks are bonded together with an extremely precise interval separating them. To prevent disturbances, it is necessary to ensure that the layer thicknesses themselves are formed very accurately and that the bond will result without trapping gas bubbles. Contaminants which could settle onto the coating from above must be prevented with expensive installations in the clean-air rooms.

A coating device is known from EP-A-356140 which coats a disk lying on a rotating support inside a sealed chamber through a discharge or nozzle port. A small clearance above the disk is supposed to prevent any droplets thrown off by the rotating movement of the disk edge from re-entering on or below the disk through the circulation system. It was then however found that a sealed space above the disk can lead to increased temperature or an uneven temperature distribution on the support as a result of the heat arising from the drive for the disk support. Temperature differences on the disk or in the applied coating liquid can lead to differences in flow behaviour and correspondingly uneven coating thicknesses. At the start of the coating process, the fluid present in the supply line to the nozzle can have a temperature different from that of the liquid flowing in from the storage container. Moreover, droplet formation on the nozzle opening can lead to disturbances at the beginning or end of the coating operation. Because in this known coating process the liquid cannot be applied exactly during precisely one revolution of the disk, steps in the applied coating composition can result in the starting or end zones. These are broken up by flow, but often not completely, particularly in the case of coating materials of high viscosity.

Temperature-dependent flow behaviour will also lead then to problems when the discharge nozzle is moved radially over the disk with a precision movement device. When coating with a movable nozzle, the coating liquid should be applied to the disk in precise bands precisely where it is supposed to be. For that reason the construction of the movement device is extremely complex and, in addition, together with the rotating movement and a metering pump for the coating liquid, controlled by a complex mechanism. This is also because the fluids to be applied can afterdrop.

Another coating device is disclosed in the US-A-4590094 where flowable material is deposited in the middle of the disk by a stamp body from down below onto the surface of a disk. The disk is held rotatably on a spindle in order to rotate it. Due to this rotation the material in the middle of the disk is spread over the entire surface.

This method has the same problems with respect to a perfect evenness of the coating since it is uncertain whether the quantity of material will be deposited exactly in the middle of the disk. A slight shift with respect to the axis if rotation will lead to an none uniform distribution of material over the disk surface.
With this known technology a further problem occurs: Most known disks have a hole in the middle and are not prepared for taking material.

To overcome the above mentioned disadvantages the inventors developed a process and device for coating disks as published in the WO-A-99/36187.

Differently to the past the device for coating disks used a holding device for holding a first disk to be coated and an annular nozzle unit for the application of coating liquid to the first disk. In this known device the coating liquid is applied continuously from the nozzle unit by a pump which might be an simpler construction than the pump used in the processes described above, since afterdrop is not a problem in a continuous liquid flow. The liquid in this known process further reaches a collection zone via an annular wetting zone (through the annular nozzle) and being returned from the collection zone to the nozzle unit via a storage tank. The liquid thus flows in a circulation and on its circulating way the required quantities of liquid should stick to the lower side of the disk by adhesions-contact between the liquid ring on the ring nozzle and the lower side of the disk positioned above the ring nozzle.

A movement unit permits the first disk to be brought concentrically into contact with the wetting zone above the ring nozzle and again removed from it. A ring of coating liquid remains on the first disk as a result of adhesive forces. This ring was - theoretically - uniformly distributed over the first disk, for example, by means of a centrifuge. Alternatively before applying centrifugal forces a second disk was put towards the first disk. The continuous flow of coating liquid permitted a constant viscosity of the coating liquid to be achieved. The problems mentioned above were avoided. However there is one physical phenomena which hinders the known coating process to be perfect; especially when used for the coating processes of a disk-sandwich as it is used especially in DVD, DVD-RW and other disk sandwiches:

Since the liquid ring attached by adhesion to the disk might not be perfectly in its cross section over the whole ring area, the moment when the ring of liquid on the first disk contacts the second disk is critical. When an uneven (higher) area of liquid contacts the second disk unintentionally first and in good time before the other parts of liquid contacts the second disk, a flow of liquid starts, triggered by the adhesive forces at the top of the liquid height. This flow tends to enhance the disproportion since more liquid is drawn to the place where already a plus of liquid was. This phenomena - after all - could lead to a sandwich disk with an uneven distribution of liquid, which in turn can lead to a sandwich of uneven thickness which might not be usable for the purposes of the particular type of DVD, DVD-RW or other sandwich disks. The results could possibly be improved by rotating the disks at a high speed in order to throw the liquid over the rim of the disk. This could eventually even the thickness of the liquid to a certain extend. On the other hand high speed splashing liquid of that kind (dye) might produce further problems on the liquid itself (gas inclusions, loss etc).

Further devices are known to the man skilled in the Art:

The DE-A-19835660 discloses a sophisticated device with a movable applying needle, where the problem of after dropping is not yet perfectly solved.

The recent WO-A-00/16910 discloses a device for coating disks with a distribution element working from above and containing a liquid chamber and an annular slot in the bottom of that liquid chamber through which an annular coating ring may be applied form above onto the upper side of a disk. No measures are provide to overcome the problems mentioned above. Moreover since the liquid being provided from above it might be a problem to provide the right quantity of liquid since the earth acceleration and the adhesive forces are acting on the liquid ring in the same direction.

The invention therefore addresses the problem of uneven liquid distribution in such a device and/or process, and is looking for a better device and/or process which makes it possible at low cost to provide the disk with a precise and rotationally symmetrically distributed coating of constant quality between two disks.

This problem is solved by the combination of features of claims 1. Dependent subclaims describe advantageous variants of the device of claim 1.

During the solution of the problem it was recognised by the inventors that an application of a single ring of liquid is disadvantageous since the quantity of liquid ought to be exactly the quantity which is needed afterwards to cover the whole disk or to fill the whole space between the two disks in the sandwich-like disks .

Starting from that point the first step to solve the existing problems was to split the single annular ring of liquid into a minimum of two rings of liquid which are applied concentrically with respect to each other and with respect to the rotating axis of the disk.

This first inventive step allows to overcome the problems due to the fact, that if problems with unevenness arise, these problems are most likely different in each of the two or more rings. This allows a compensation of the unevenness. Also the fact that two rings or more are applied reduces the quantity of liquid in each ring. Reduction of quantity improves the ability of metering the liquid and controlling its applied quantity. This first invention can be used in different application processes and in different ways of application:
a) the rings are applied concentrically in one plane (surface) of the disk (lower plane or upper plane);
b) one ring is on a first disk and the other ring is on a second disk (both disks are parallel and concentrically with respect to each other) and the rings have the same diameter;
c) process as in b) but the rings have a slightly different diameter;
d) process as in b) or c) but on at least one of both disks are more then one concentric rings;
e) the total number of rings exceeds the number of 3;

Among those application processes one common effect occurs: The height of the annular rings of coating liquid can be significantly smaller then it needed to be when only one ring of liquid was provided, as in the state of the Art. This is because the quantity of liquid to be distributed over the disk surface or between two disks respectively is split into the partial quantities of the rings only. The reduction of quantity of liquid within one ring improves the possibility to dose that quantity exactly. This helps to reduce loss of liquid or pollution of liquid since only the required quantity of liquid will be put onto the disk and not more. For that reason there will be in most cases no overflow of liquid on the rims of the disks. This in turn reduces also the exposure of the liquid to air.

The invention can be used either with ring nozzles as already known in the Art or with ring shaped stamp bodies which are not connected to a pump but which dip into a pool to take liquid and which than touch the disks in a stamp like manner. However during this stamping process the stamp body will not directly touch the disk but the liquid in the stamp body will have a torus like shape and that part of the torus pointing away from the stamp body will touch the disk. Because of adhesive forces the torus will be destroyed and the liquid will then stick to the disk and to the stamp body. After removing the stamp body from the disk, the liquid ring will stick on the disk and a remaining part of liquid will remain in the stamp body.
Depending on the adhesive forces - resulting from the stamp body on the one hand and from the disk on the other hand - the liquid ring on the disk will contain more or less quantity compared with the remaining liquid on the stamp body. According to this rule the relation between the two quantities may be controlled by further developments of the invention:

The stamp body may be covered with anti-adhesive coatings in order to reduce the quantity of remaining liquid. Such coatings could be materials like Teflon (R) or the like. In cases of good quality coatings the quantity of remaining liquid can be reduced to zero.

On the other hand the take up capability of the disk could be increased and/or regulated - according to a further development of the invention - by charging the disks with electrostatic energy. At the same time or alternatively the stamp body could be charged with antistatic energy.

As a best mode for the processing of sandwich disks (DVD-disks in the most cases) the inventors found a system and a process with the application of at least one ring (first ring) on the lower surface of an upper disk (first disk) and the application of at least one second ring on the upper surface of a lower disk (second disk).

To have two rings which are contacting themselves improves significantly the quality of the liquid distribution between both disks.

The liquid rings can be applied in a serial manner or at the same time. In the serial manner the first or second ring is applied first and then the respective other ring is applied by an intermediate step using a second stamp body.
When the liquid rings should be applied in a single step - according to the invention - a novel double stamp body may be used. This special stamp body may be charged wit liquid in the same manner as a single stamp body would be charged and would be then placed between two disks before they close towards each other.

The stepwise application of the rings may be done by using two stamp like bodies: a first stamp body for co-operating with a second stamp body, whereas - for example - the first stamp body is applying the first ring and is in a second step transporting liquid to the second stamp body in a similar manner.

Preferably shapes of the torus of the liquid on the first stamp body is different to the shape of the torus of the liquid on the second stamp body. Most likely the height of the first ring on the first disk is greater then the height of the second ring. This comes mostly also because of the fact that the first ring on the lower surface of the upper disk is hanging whereas the ring on the upper surface of the lower disk is standing and in both cases the gravity tends to form the rings accordingly.

Also preferably the diameters of both rings are slightly different in order to have the ring with the smaller diameter to flowing outwardly when in contact with the ring with the greater diameter. This helps to speed up the distribution of the liquid between both disks. This phenomena is increased when centrifugal forces are acting on the disks to pull the liquid outwardly of the area of the rings.

However the invention is not limited to rotating disks at all since the new process works - especially with sandwich type disks - also without any rotation of the disks due to the adhesive effects between the two disks.

To transport and hold the disks and/or the ring nozzles known transport and holding systems may be utilised. One of such systems could be according to the WO99/36187-A of the inventors or according to the EP-A793224 as an example. For that reason more detailed explanations are not necessary for the man skilled in the art.

To permit the preparation of an uncoated outer edge, a cleaning step per the state of the art may be provided as described in the WO-A-99/36187.

For the sandwich disks a further process of bonding may be provided involving the step of pressing the disks together as also described in said WO-A.

The selected width and diameter of the wetting zone will depend upon the additional processing desired.

Since the invention provides for a more secure metering of the liquid an overflow arrangement and a collecting zone for overflowing liquid will not be necessary in any cases. However, as a measure of certainty such arrangements for overflowing may be provided within the frame of the invention.

Such arrangements are on the other side very useful for providing a dipping zone, where the stamp body may dive in order to take the proper quantity of liquid.

Such arrangements are for that reason preferably continuously flooded and drained with the coating liquid.
Contrary to what was in the past, the liquid on the applicator (8) is not suspect to frequent changes in quantity which normally occurs when pumps deliver liquids.
On the other hand, the invention is not restricted to systems without ring nozzles.
Ring nozzles as disclosed in said WO-A might also be used within the frame of the invention.
In any case the inventions covers all the following variants:
a) the first stamp body is liftable and the second stamp body is stiff;
b) the first stamp body is stiff and the second stamp body is liftable;
c) both stamp bodies are liftable;
   and/or
d) the first disk is liftable and the second disk is not liftable in a vertical direction;
e) the first disk is not liftable in a vertical direction and the second disk is liftable;
f) both disks are liftable;
   and/or
g) any of the disks are rotatably mounted ;
   and/or
h) at least one of the stamp bodies are substituted by ring nozzles;
   and/or
i) the two stamp bodies are combined into one piece which may be lifted into the liquid and out of it;
j) the combined stamp bodies are substituted by two combined ring nozzles connected to a metering pump;
Within the invention a filtering and/or degassing device for the liquid may be provided.

The drawings explain the invention with the aid of symbolic execution variants.

In the drawings it is shown schematically:
- Fig.1: a vertical section through a coating device before a disk is placed into the device;
- Fig.2: the device of Fig.1 with a lifted first stamp body;
- Fig. 3: only the first and second stamp bodies when the tough each other to transport the liquid from the first stamp body to the second stamp body;
- Fig.4: the situation of Fig.3 but after the two stamp bodies have dismerged;
- Fig.5: the situation of Fig.4 but when the first stamp body is diving for fresh liquid and a second disk is introduced into coaxial position with respect to the stamp bodies;
- Fig.6: the situation of Fig.5 before contacting the first disk;
- Fig.7: the situation of Fig.6 when the adhesive forces connected the liquid ring with the first disk;
- Fig.8: a variant of Fig.1 with a two piece stamp body;
- Fig.9: the variant of Fig.8 when diving for fresh liquid;
- Fig.10: a variant of a first stamp body with a controllable volume;
- Fig.11: a variant of Fig.1 with a stamp body with an active liquid thrust;
- Fig.12: a variant of Fig.1 with a combined first and second stamp body with a membrane assistance;
- Fig.13: a first and second disk whereas the first disk bears a first liquid ring;
- Fig.14: a first and second disk in the position just before contacting of the first and second liquid ring;
- Fig.15: the moment after the two liquid rings have contacted each other and
- Fig.16: a variant for a disk holder with a rotating drive for producing centrifugal forces on the coating.

The drawings are described together. Identical parts bear identical numerals; similar parts or parts with similar functions bear numbers with the same figure but with different indices.
The numeral list and the disclosure in the claims are part of the disclosure of this specification.

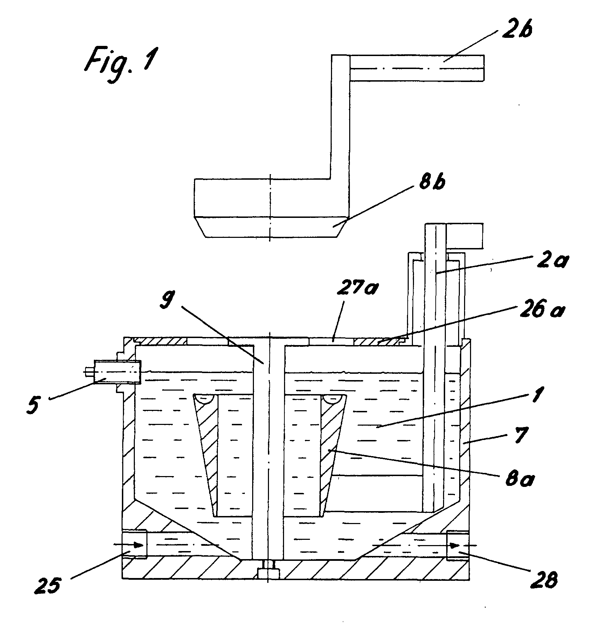

Fig.1 shows a coating device with a holding plate 26a for holding a disk 3b to laid down on said holding plate 26a. The holding plate 26a forms a lid of a container 7 for collecting a liquid for coating disks.

The device further contains a first stamp body 8a and a second stamp body 8b. The first stamp body 8a is held on a lift 2 for allowing the first stamp body 8a to dive into the liquid 1 in the container 7. The lift allows a passing of the first stamp body 8a through an annular slot 27a in the holding plate 26a. This allows the stamp body 8a to coat more then just one disc on one side. The second stamp body 8b is also guided by a lift (not shown), comparable to the lift of the first stamp body 8a.

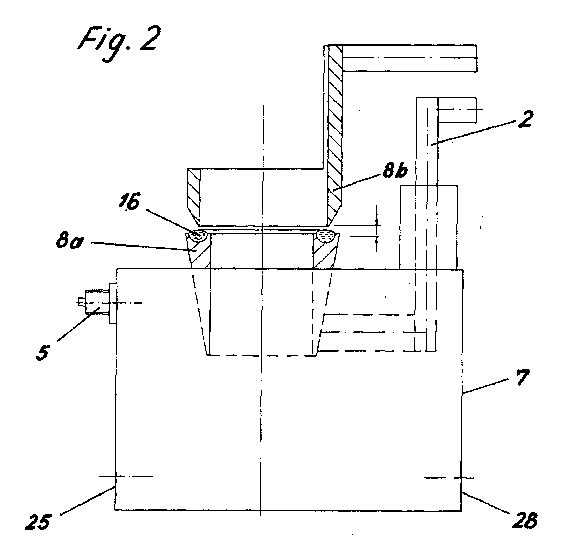

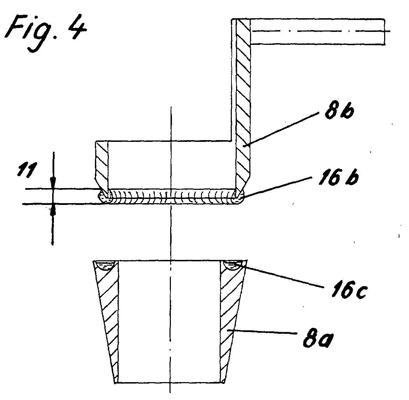

As Fig. 2-4 show, the first stamp body 8a supports the second stamp body 8b with an liquid ring 16b. This liquid ring 16b will then be deposited on the upper side of a second disk 3b.

To keep the liquid in good fresh condition and in right quantity a liquid exchange is provided through an inlet 25 and an outlet 28. A sensor 5 detects the right level of liquid 1 and is connected to a control which triggers a pump (not shown) to serve the inlet 25 and/or the outlet 28.

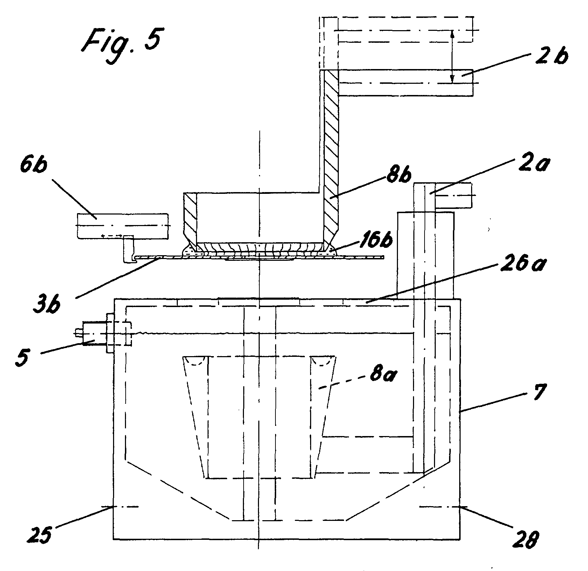

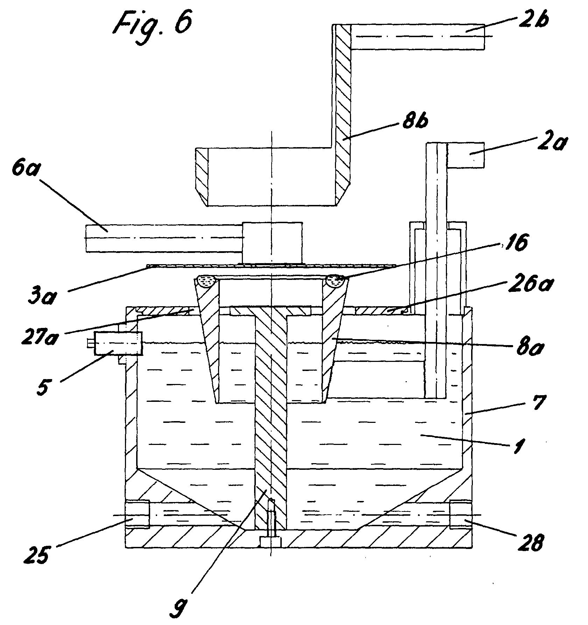

In the centre of the device is a centring holder 9 for centring a disk. The centring holder 9 is the target of a movement unit 6a or 6b as shown in Fig.5 and 6 e.g. It may also serve as a reset guide for those movement units 6a;b and other parts like the stamp bodies 8a,b and the holding plate 26. The centring holder 9 may also together with the holding plate 26 serve as a rest for the first and or second disk 3a,b.

With the device of Fig.1 a single disk can be provided with a liquid ring on its lower surface and on its upper surface as well. According to the invention and as will be seen in the other figures it can be used also for applying a first ring on a first disk and a second ring on a second disk. Not shown in detail are further inventive structures covered by the invention, which provide a second or more first stamp bodies, concentrically mounted to the first stamp body 8a to allow the inventive application of more than one liquid ring on one side of a disk 3. The same is true for the second stamp body 8b.

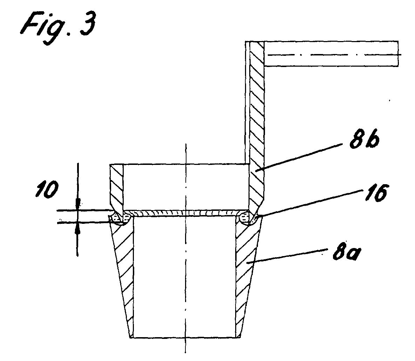

As will be clear from Fig.3 the depth of communication 10 between the first stamp body 8a and the second stamp body 8b will be also responsible for the quantity of liquid which will remain on the second stamp body 8b after the two stamp bodies disapproached each other again. Some control mechanism are therefor provided if the controls of the lifts for both bodies 8a,b are adjustable, as thought by a further development of the invention.

The height 11 of the intermediate liquid ring 16b on the second stamp body 8b is a measure for the quantity of liquid which will be put onto the second disk 3b as seen in Fig.5.

The movement unit 6b of Fig.5 possibly relates to an external handling system and is known in the Art per se. It allows a horizontal movement of the disk 3 and/or a vertical movement of said disk 3. Preferably it is automatically controlled as a response to the control of the lifts 2a,b of the stamp bodies 8a,b. Either the disk 3b is controlled moved towards the second stamp body 8b or the second stamp body 8b moves controlled toward the disk 3b in order to apply the liquid ring 16b as shown in Fig.5.

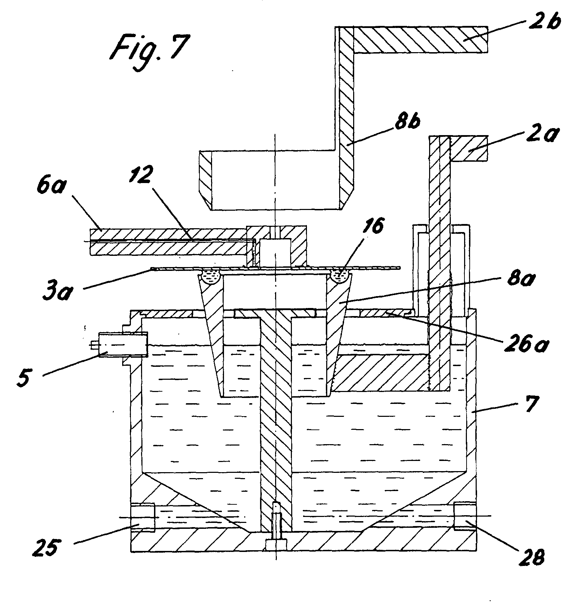

Fig.7 discloses one possible detail with respect to the movement unit 6a: a vacuum tube 12 for providing vacuum for holding the disk 3a. This feature is not restrictive since other known systems of holding may be utilised, as for example seen from the holding unit 6b.

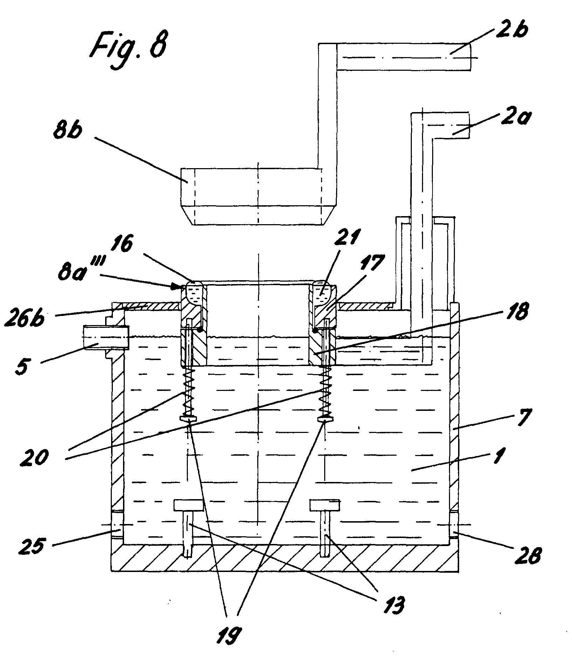

Fig.8 discloses a variant to the first stamp body 8a. This stamp body 8a"' consists of two ring shaped elements: an outer ring 17 and an inner ring 18. The inner ring 18 is tube like and provides a closing system for the outer ring 17 in order to build a stamp body which holds a liquid ring 16, as shown in Fig.8.

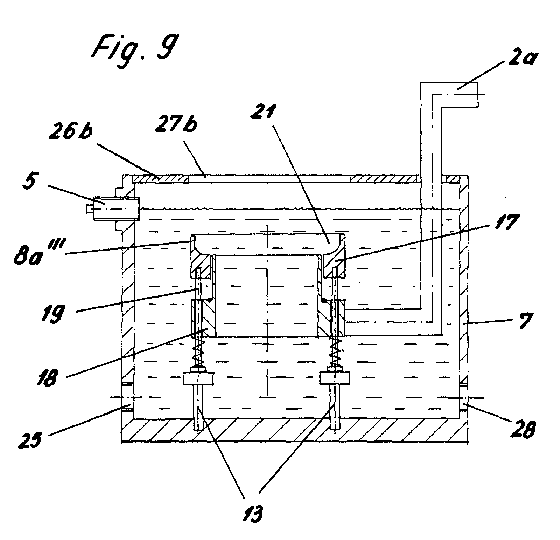

The two elements are connected by two or more rods 19. The rods 19 bear a spring 20 each. Said spring 20 biases the inner ring 18 towards the outer ring 17. If however the lift 2a lowers the position of the stamp body 8a"' until the rods 19 rest on supports 13 on the bottom of the container 7, then the inner ring 18 which is connected to the lift 2a directly slides along the rods 19 against the force of the springs 20, as can be better seen in Fig.9.

This resting position serves as the diving and filling position. It is advantageous since it allows to empty the ringspace 21 completely. Polluting particles may be washed out and a fresh liquid can be taken by the stamp body 8a"'.

This special structure of such a stamp body 8a''' may be used also independent form the other parts of the invention, since it might be used perfectly also for applying only single rings of liquid onto surfaces. It might be used even with other systems like applying rubbery gaskets onto disks or the like.

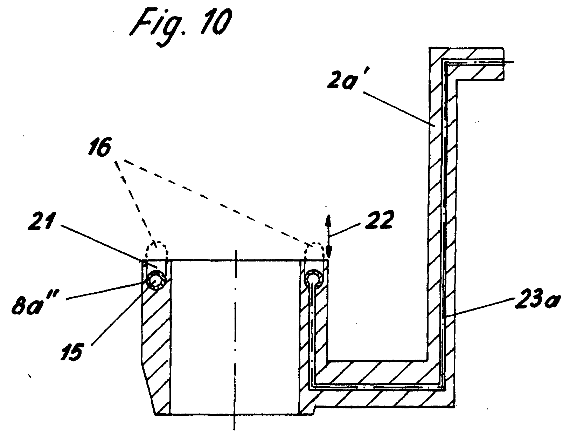

The variant of Fig.10 discloses also a novel stamp body 8a" for to be used either with the invention or in other places independently. It provides a flexible tube 15 within the ring space 21 of the stamp body 8a". Said tube 15 is connected to a positive or negative air pressure device (not shown) which allows to fill or empty the tube 15 with gas pressure. This in turn allows to regulate the volume of liquid in the ring space 21. This in turn allows the liquid ring 16 to be raised or lowered. If this is done in a step by step manner, this system can be used for applying the liquid ring directly onto a disk 3 without using the lift 2a' for that purpose. If this is done in a pulsating manner, this system can be used for controlling the maximum quantity of liquid available for applying. This new system may also be used for cleaning the ring space 21 by - in a reset or cleaning mode - completely pushing out any liquid from the space 21.

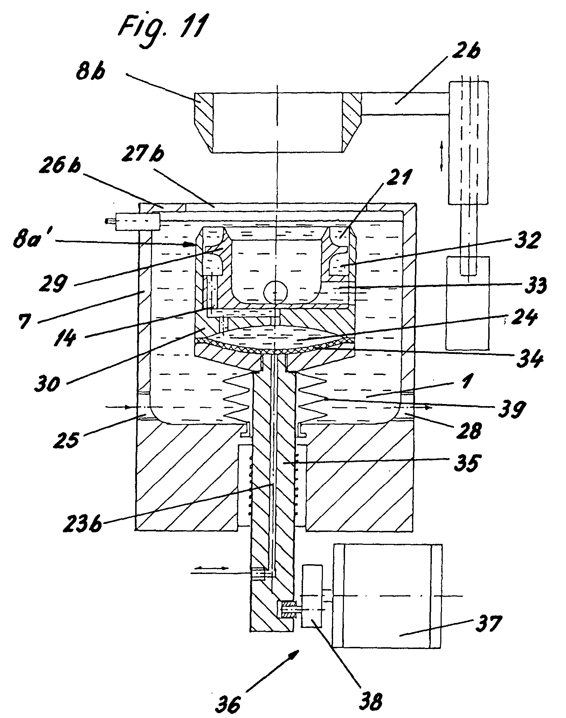

A further variant is shown in Fig.11, where the first stamp body 8a' is also split into more elements. A separately non movable inner ring 29 provides together with an outer body 30 the ring space 21 and a ring channel 32. Through holes 33 provide for emptying the space inside the inner ring 29 as soon as the stamp body 8a' is pushed outside the liquid 1.

Further channels are provided to build a liquid supply 14. This liquid supply builds a connection between a pumping unit 24 and the ring channel 32 and further the ring space 21 respectively. The function of the pumping unit 24 is to allow a relative liquid flow in the area of the ring space 21. The pumping unit 24 is controlled by a membrane 34 which is biased by pressure through a pressure connection tube 23b.

The outer body 30 is connected to a stem 35. Said stem 35 is connected to a drive 36. Which may have different structures. In this example the drive consists of a motor 37 and a excenter drive 38. The drive 36 is responsible for lifting and lowering the stamp body 8a'. To tighten the stem 35 versus the container 7 a flexible membrane 39 is provided.

With this novel and independent usable device disks can be applied with liquid rings either by lifting the stamp body 8a' until it reaches the disk or by lifting the stamp body 8a' close to the disk and then lifting the liquid ring by activating the pumping unit 24 in order to move the liquid ring onto the disk.

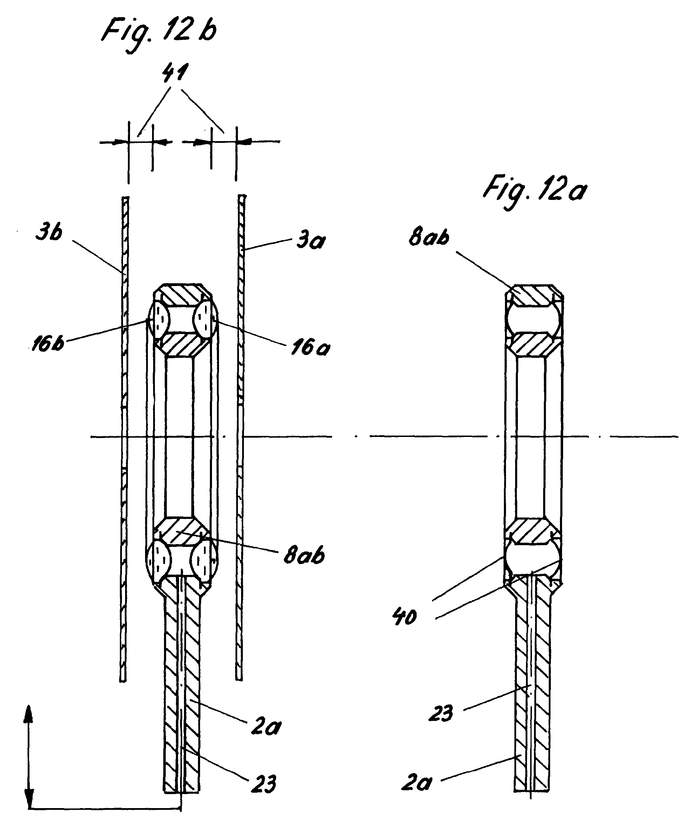

The variant of Fig.12 discloses a unified stamp body 8ab which is applicable for providing liquid rings simultaneously onto first and second disks 3a, 3b. As a matter of further development the stamp body 8ab may contain a flexible tube 15 (not shown) or - as shown - membranes 40.

The inner part is connected through a pressure connection tube 23 with pressure or vacuum. Fig.12a shows the empty status and Fig.12b shows the filled status. With 41 a hub is shown which is necessary to contact the disks 3a,b with the liquid rings 16a,b. This hub can be done by the disks 3a,b or by the stamp body 8ab, depending on the detailed wish of the user.

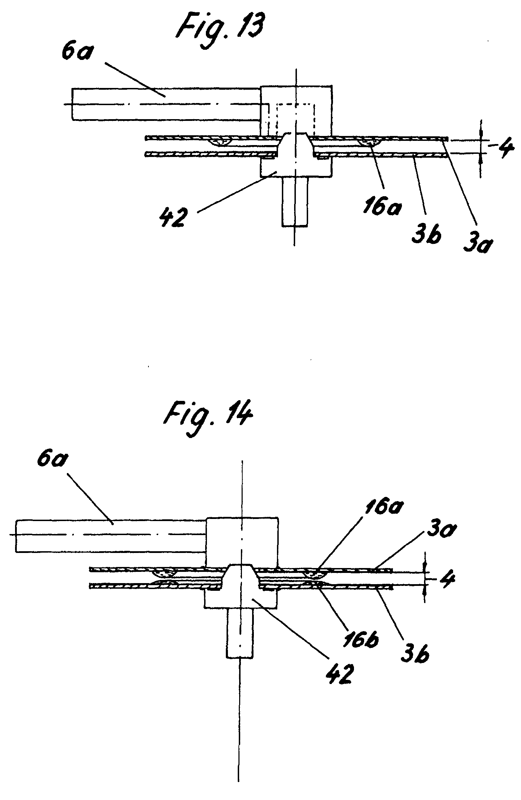

As will be seen in Fig.13 a movement unit 6a can place a first disk 3a above a second disk 3b within a gap 4. If the first disk 3a got a liquid ring 16a then a sandwich compound may be built. However according to the invention the application of a second ring before building the sandwich on the second disk 3b is preferred, as described above. If however only a single ring is applied as shown in Fig.13, it is preferred that only the first ring 16a on the first disk 3a is applied since this hanging ring does not tend to flow uncontrolled as it might be the case with a second standing ring of liquid.

Within the frame of the invention of course the shown single liquid ring 16a may be divided into two concentrical rings on the same surface of the first disk 3a.

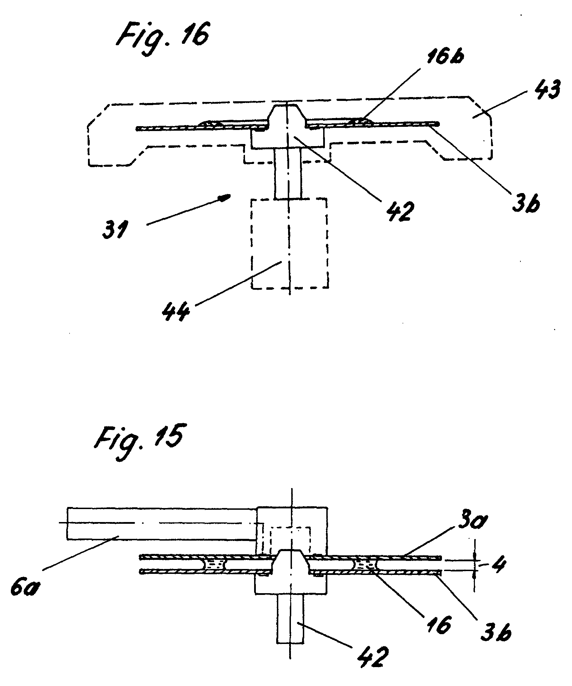

Fig.14 shows the preferred system with both liquid rings 16a and 16b.

Fig.15 shows the moment when the two liquid rings 16a and 16a have contacted each other.

Fig.16 relates to an alternative system where a disk 3b may be rotated additionally by a centrifuge 31. A protective cover 43 is shown as well as a rotary motor 44.

It is obvious that devices per the invention can be combined, as desired, with known centrifuge, handling or bonding equipment.

### Numeral list

- 1: liquid (dye or furnish e.g.)
- 2: a,b lift
- 3a: first disk
- 3b: second disk
- 4: gap
- 5: sensor
- 6a,b: movement unit
- 7: container
- 8: applicator
- 8a: first stamp body
- 8b: second stamp body
- 8a','',''': variants of first stamp bodies
- 9: centring holder
- 10: depth of communication
- 11: height of intermediate liquid ring
- 12: vacuum tubes
- 13: support
- 14: liquid supply
- 15: flexible tube
- 16a: first annular ring
- 16b: second annular ring
- 16c: intermedial ring for being transported between the first and second stamp bodies (8a,b)
- 17: outer ring
- 18: inner ring
- 19: rod
- 20: spring
- 21: ring space
- 22: arrow shows movement of liquid ring 16
- 23: pressure connection tube
- 24: pumping unit
- 25: inlet
- 26: holding plate
- 27a,b: annual slot
- 28: outlet
- 29: none movable inner ring
- 30: outer body
- 31: centrifuge
- 32: ring channel
- 33: through holes
- 34: membrane
- 35: stem
- 36: drive
- 37: motor
- 38: excenter drive
- 39: membrane
- 40: membranes
- 41: hub
- 42: holder
- 43: protective cover

## Claims

1. Device for coating one or more disks (3), particularly optically readable data carriers, with a holding device for holding a disk (3) to be coated, and an applicator (8) for applying the coating liquid to the surface of the disk (3), wherein the applicator has an annular appearance and a container (7) is provided for holding coating liquid to be brought onto the applicator in order to apply an annular ring of coating liquid onto the surface of said disk (3) and wherein a movement unit (6) as part of the holding device is provided between the applicator (8) and the disk (3), in order to move the disk (3) onto and off the area of the applicator (8), **characterized in that** the device and/or the applicator (8) is prepared to apply at least two concentric rings of coating liquid onto the disk or disks respectively (3).

2. Device according to claim 1, **characterized in that** the movement unit (6) is adapted to move and hold a first disk (3a) and a second disk (3b) and further adapted to move the first disk (3a) in such relative position to the nozzle unit (8) that the first disk (3a) can be covered with a first annular coating liquid ring (16a) on that side of the disk (3a) which will be facing the second disk (3b) and further adapted to move the second disk (3b) in such a relative position to the applicator (8) that the second disk (3b) can be covered with a second annular ring (16b) on that side of the disk (3b) which will be facing the first disc (3a).

3. Device of claim 1 or 2 **characterized in that** the applicator (8) is split into a first stamp body (8a) and into a concentric second stamp body (8b), wherein the first stamp body (8a) is adapted to apply a first annular ring (16a) of coating liquid onto the lower side of a disk (3) whereas the second stamp body (8b) is adapted to apply a second annular ring (16b) of coating liquid onto the upper side of a disk (3).

4. Device of claim 2 or 3, **characterized in that** the movement unit (6) is adapted to enable the lower side of the first disk (3a) to be moved toward the applicator (8) or toward the first stamp body (8a) from above, and enables the upper side of the second disk (3b) to be moved toward the applicator (8) or the upper second stamp body (8b) from down under, or that the second stamp body (8b) is adapted to be moved toward the upper side of the second disk (3b) both in order to together apply said at least two annular coating liquid rings.

5. Device of any of the previous claims **characterized in that** the lower stamp body (8a) is connected to a liquid supply (14) whereas the upper second stamp body (8b) is not connected to any liquid supply and whereas at least one of or both of the stamp bodies (8a,8b) are movable relatively towards and away from each other in order to allow the application of an intermediate annular coating liquid ring (16c) from the first stamp body (8a) onto the second stamp body (8b).

6. Device of any of the previous claims, **characterized in that** the movement unit (6) comprises a holding plate (26) on which the disk (3) or the first disk (3a) respectively can by laid down, wherein said holding plate (26) provides an annular slot (27) to allow the pass through of the stamp body (8) or any of the first stamp body (8a) or second stamp body (8b).

7. Device of any of the previous claims, **characterized in that** the stamp body (8) or the first stamp body (8a) form an overflow device from which the coating liquid flows upward and outward and reaches the container (7) due to the force of gravity.

8. Device of any of the previous claims, **characterized in that** the container is connected to or contains any of: a pumping unit (24) and a thermostatically controlled heating and/or cooling device, a circulation device which enables the coating liquid to be conveyed through the system continuously, with essentially constant viscosity and temperature, in which case the total flow of coating liquid preferably may exceed the partial flow remaining briefly on a disk (3) and/or an flooding inlet (25) and an flooding outlet (28) for changing the liquid in the container (7).

9. Device of claim 8, **characterized in that** the applicator (8) or first stamp body (8a) and a pumping unit (24) connected therewith are adapted to produce a variation of throughput for the generation of varying or pulsing partial flows of liquid at the stamp body (8) or first stamp body (8a).

10. Device of any of the previous claims, **characterized in that** the holding device comprises a centrifuge (31), or is adapted to convey the disk (3) to a centrifuge (31), so that the coating liquid deposited in the shape of a ring (16) on the disk (3) can be distributed radially outward by the rotation of the disk (3), in which case the container (7) preferably extends around the zone of the centrifuge in order to catch any coating liquid thrown off the disk (3).

11. Device of any of the previous claims, **characterized in that** the holding device and/or the moving device (6) is adapted to move a first disk (3a) covered with coating liquid concentrically toward a second disk (3b) in such a way that the two disks (3a,b) are mutually positioned with an intervening gap (4) in which the coating liquid of the disk (3a,b) is arranged in the shape of two rings (16a,16b), that after contact between both rings (16a,16b) or both disks (3a,b) respectively a radial distribution of the coating liquid and a desired interval between the disks (3a,b) can be achieved.

12. Process for coating disks (3), particularly optically readable and writable data carriers, with a holding device for holding a disk (3) to be coated, and a conveying device and an applicator (8) for applying the coating liquid to the disk (3), **characterized by the step** that the application of the coating liquid takes place via the concentric contacting of more than one annular liquid rings of coating liquid, in which case the coating liquid is conveyed through an applicator (8), preferably through a first and second annular shaped stamp bodies

13. Process according to claim 12, **characterized in that** the coating liquid, applied in at least two rings (16a,b), is distributed radially over the disk (3) by means of a centrifuging process.

14. Process according to claim 12 or 13, **characterized in that** the coating liquid, applied
in the shape of a ring, is distributed radially between the two disks (3) to be bonded together
by means of a pressing operation and/or the application of a partial vacuum to a gap
between the two disks (3) and/or by adhesive forces between the liquid and the disks (3a,b).

15. Process of any of the preceding claims 12-14, **characterized in that** the liquid transported by the stamp bodies (8a,b) to the disk (3) is taken out from a container (7) by a diving process of the stamp body (8a).

16. Process of any of the preceding claims 12-15, **characterized in that** either the stamp bodies (8a,b; a') and/or the disks are liftable along a transport path which is vertical or parallel on the plan of the disks (3).
